# EUROPEAN PATENT APPLICATION

(11) **EP 4 262 263 A1**
(43) Date of publication of application: **18.10.2023**
(21) Application number: 21902639.0
(22) Date of filing: 08.12.2021
(51) Int. Cl.: H04W 24/02, H04W 24/10, H04W 40/12

(54) **REROUTING METHOD AND APPARATUS, AND COMMUNICATION DEVICE**

(30) Priority: 11.12.2020 CN 202011460042
(71) Applicant: Vivo Mobile Communication Co., Ltd., Dongguan, Guangdong 523863 (CN)
(72) Inventor: WEN, Ming, Dongguan, Guangdong 523863 (CN); LIU, Jinhua, Dongguan, Guangdong 523863 (CN)
(74) Representative: Conti, Marco
(86) International application number: PCT/CN2021/136402
(87) International publication number: WO 2022/121934

(57) **Abstract**

The present application relates to the technical field of communications, and provides a rerouting method and apparatus and a communication device. The method comprises: a first communication node obtains target information, wherein the target information comprises at least one of the following: link state information of a backhaul path associated with the first communication node, and identification information of the backhaul path; and the first communication node determines a target backhaul path according to the target information.

## Description

### CROSS-REFERENCE TO RELATED APPLICATIONS

This application claims priority to Chinese Patent Application No. 202011460042.5, filed in China on December 11, 2020, which is incorporated herein by reference in its entirety.

### TECHNICAL FIELD

This application pertains to the field of communications technologies, and specifically, relates to a rerouting method and apparatus, and a communications device.

### BACKGROUND

In a conventional communications system, there is a scenario in which an integrated access and backhaul (Integrated Access and Backhaul, IAB) node autonomously reroutes data. To be specific, local rerouting (local rerouting) can be enabled for data packets only when a radio link failure (Radio Link Failure, RLF) occurs in a link between the IAB node and a parent node of the IAB node. That is, the IAB node can select a second backhaul path different from a current backhaul path for data, thereby implementing data offloading. However, in the current mechanism, the IAB node cannot enable local rerouting for data when no RLF has occurred, resulting in less flexible data transmission of a network node. In addition, currently, the IAB node is unable to know some information about selectable backhaul paths (for example, redundant capacity or latency of a transmission link), and therefore cannot effectively determine how to perform local rerouting for data that needs to be transmitted. Blindly selecting the second backhaul path and determining a volume of data to be offloaded to the second backhaul path may lead to problems such as insufficient utilization of the capacity of the second backhaul path, congestion, or a long transmission latency in data offloading.

### SUMMARY

Embodiments of this application provide a rerouting method and apparatus, and a communications device, to resolve a problem in the conventional technology that rerouting can be performed only in a case that a radio link failure RLF occurs and therefore only a single manner of enabling rerouting is available.

According to a first aspect, a rerouting method is provided, including: obtaining, by a first communications node, target information, where the target information includes at least one of the following: link state information of a backhaul path associated with the first communications node, and backhaul path identification information; and determining, by the first communications node, a target backhaul path based on the target information.

According to a second aspect, a rerouting method is provided, including: receiving, by a second communications node, link state information reported by a first communications node in a communications system, where the link state information is regarding a backhaul link associated with the first communications node, and the second communications node is a node controlling all first communications nodes in the communications system; and configuring, by the second communications node, backhaul path identification information based on the link state information, where the backhaul path identification information is used to indicate a backhaul path selected for transmitting a data packet in the communications system.

According to a third aspect, a rerouting apparatus is provided, used in a first communications node, and including: a first obtaining module, configured to obtain target information, where the target information includes at least one of the following: link state information of a backhaul path associated with the first communications node, and backhaul path identification information; and a determining module, configured to determine a target backhaul path based on the target information.

According to a fourth aspect, a rerouting apparatus is provided, used in a second communications node, and including: a third receiving module, configured to receive link state information reported by a first communications node in a communications system, where the link state information is regarding a backhaul link associated with the first communications node, where the second communications node is a node controlling all first communications nodes in the communications system; and a configuration module, configured to configure backhaul path identification information based on the link state information, where the backhaul path identification information is used to indicate a backhaul path selected for transmitting a data packet in the communications system.

According to a fifth aspect, a communications device is provided, where the communications device includes a processor, a memory, and a program or instructions stored in the memory and capable of running on the processor, and when the program or instructions are executed by the processor, the steps of the method according to the first aspect or the second aspect are implemented.

According to a sixth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a seventh aspect, a chip is provided, where the chip includes a processor and a communications interface, the communications interface is coupled to the processor, and the processor is configured to run a program or instructions for a network side device, to implement the method according to the first aspect, or implement the method according to the second aspect.

According to an eighth aspect, an embodiment of this application provides a program product, where the program product is stored in a non-volatile storage medium, and the program product is executed by at least one processor to implement the steps of the method according to the first aspect, or implement the steps of the method according to the second aspect.

According to a ninth aspect, an embodiment of this application provides a communications device, configured to perform the steps of the method according to the first aspect, or configured to perform the steps of the method according to the second aspect.

In the embodiments of this application, the first communications node may determine the target backhaul path based on the link state information of the backhaul path associated with the first communications node and/or the backhaul path identification information, that is, the first communications node may determine currently available backhaul paths based on the link state information and/or the identification information, and then determine the target backhaul path from the currently available backhaul paths, so that the second communications node can still perform rerouting to select a backhaul path even in a case that no RLF occurs. This makes a rerouting manner more flexible, and resolves a problem in the conventional technology that rerouting can be performed only in a case that a radio link failure RLF occurs and therefore only a single manner of enabling rerouting is available.

### BRIEF DESCRIPTION OF DRAWINGS

FIG. 1 is a block diagram of a wireless communications system to which an embodiment of this application is applicable;
FIG. 2 is a schematic diagram of an IAB system in the conventional technology;
FIG. 3 is a diagram of a CU-DU structure of an IAB system;
FIG. 4 is a first flowchart of a rerouting method according to an embodiment of this application;
FIG. 5 is a second flowchart of a rerouting method according to an embodiment of this application;
FIG. 6 is a schematic diagram of a backhaul path in an IAB network according to an embodiment of this application;
FIG. 7a is a schematic structural diagram of reporting of link state information per BAP routing ID according to an embodiment of this application;
FIG. 7b is a schematic structural diagram of reporting of link state information per link ID according to an embodiment of this application;
FIG. 8 is a first schematic structural diagram of a rerouting apparatus according to an embodiment of this application;
FIG. 9 is a second schematic structural diagram of a rerouting apparatus according to an embodiment of this application;
FIG. 10 is a schematic structural diagram of a communications device according to an embodiment of this application; and
FIG. 11 is a schematic structural diagram of a network side device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects instead of describing a specific order or sequence. It should be understood that the data used in this way is interchangeable in appropriate circumstances, so that the embodiments of this application can be implemented in other orders than the order illustrated or described herein. In addition, the objects distinguished by "first" and "second" usually belong to one category, and the number of objects is not limited. For example, there may be one or more first objects. In addition, in the specification and claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used in the aforementioned systems and radio technologies, and may also be used in other systems and radio technologies. In the following descriptions, a new radio (New Radio, NR) system is described for an illustration purpose, and NR terms are used in most of the following descriptions, but these technologies may also be applied to applications other than an NR system application, for example, a 6^{th} generation (6^{th} Generation, 6G) communications system.

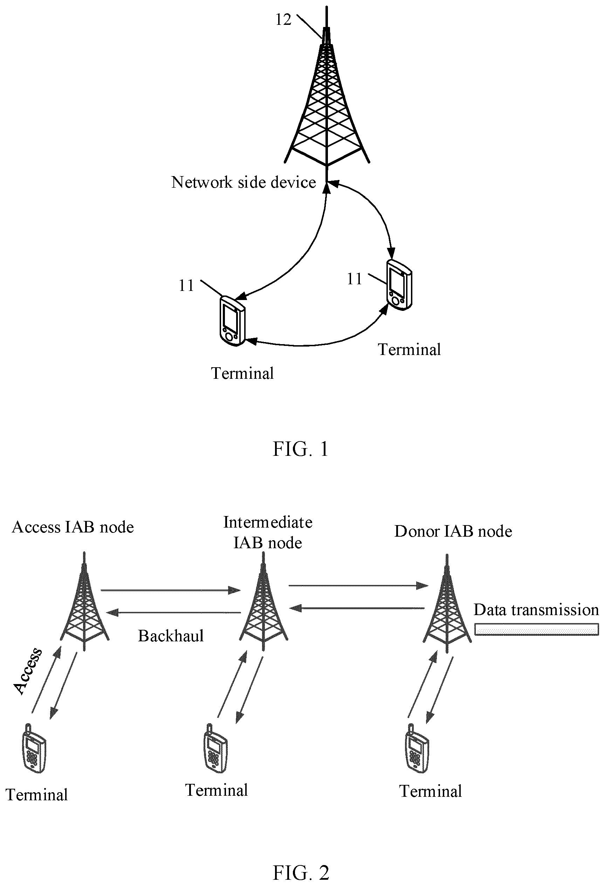

FIG. 1 is a block diagram of a wireless communications system to which an embodiment of this application is applicable. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PLTE). The wearable device includes a band, a headset, glasses, or the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

First, related terms in the embodiments of this application are described.

### 1. IAB network

FIG. 2 is a schematic diagram of an IAB system in the conventional technology. As shown in FIG. 2, an IAB node includes a distributed unit (Distributed Unit, DU) functional part and a mobile termination (Mobile Termination, MT) functional part. By using MT, an access node (namely, IAB node) can find an upstream access point (a parent IAB node or an IAB-donor-DU), and establish a wireless connection to a DU of the upstream access point, where the wireless connection is referred to as a backhaul link (backhaul link). After an IAB node establishes a complete backhaul link, the IAB node enables a DU function of the IAB node, and the DU provides a cell service, that is, the DU can provide an access service for user equipment (User Equipment, UE). An integrated access and backhaul loop includes a donor IAB node (or referred to as an IAB donor, including an IAB-donor-CU and an IAB-donor-DU), and the donor IAB node has a directly connected wired transmission network.

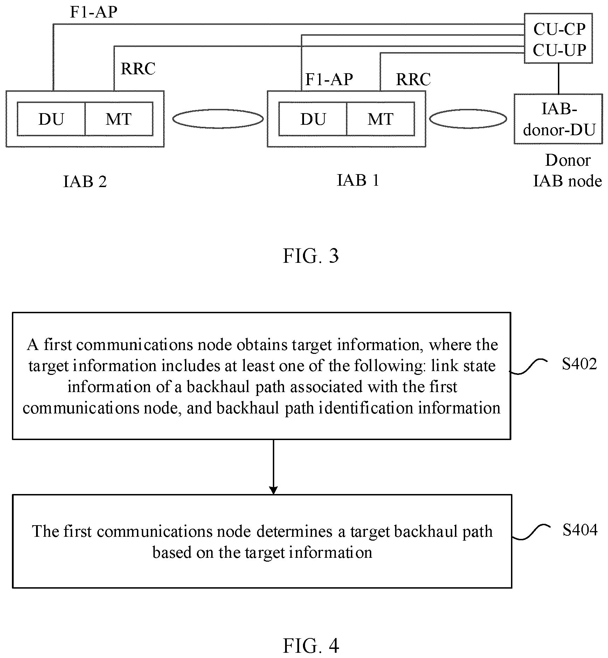

FIG. 3 is a diagram of a centralized unit-distributed unit (Centralized Unit-Distributed Unit, CU-DU) structure of an IAB system. In an integrated access and backhaul loop, DUs of all IAB nodes are connected to a CU node, and the node configures the DUs by using an F1-AP protocol. The CU configures MT by using an RRC protocol. An IAB-donor-DU node has no MT functional part.

The IAB system is introduced to resolve a problem that a wired transmission network does not provide full coverage in a case that access points are densely deployed. That is, an access point can rely on wireless backhaul in a case that the wired transmission network is unavailable.

### 2. BAP protocol of an IAB network

A backhaul adaptation protocol (Backhaul Adaptation Protocol, BAP) layer is a protocol layer specific to an IAB network, and each BAP entity in an IAB node has an address, referred to as a BAP address. The address, in combination with a routing identifier (BAP routing ID) allocated by an IAB-donor-CU, may be used for routing data. Some functions provided by the protocol layer are as follows:

Routing function 1: A data packet is sent from the CU to LTE through a backhaul channel, or a data packet is sent from LTE to the CU through a backhaul channel.

Routing function 2: The BAP protocol also provides a function of routing F1-AP information, to send F1 control information from the CU to an IAB-DU through a backhaul channel, or send F1 control information from an IAB-DU to the CU through a backhaul channel.

QoS control information transmission function: Some BAP control PDUs (Protocol Data Unit, protocol data unit) used in the IAB network are defined in the BAP protocol layer, and are used for performing traffic control, notification of a radio link failure, and the like.

### 3. Flow control (flow control) in an IAB network

IAB supports two types of flow control mechanisms: hop-by-hop flow control and end-to-end flow control.

### (1) Hop-by-hop flow control

The 3GPP RAN2 agrees to using a flow control mechanism in an IAB network to resolve data congestion during downlink transmission. The data congestion during downlink transmission is data accumulation caused in a case that data received by an IAB node from a parent IAB node of the IAB node is not sent to a downstream node or UE in a timely manner. In the case of data accumulation, that is, in a case that data accumulation causes a buffer overflow risk, the IAB node sends a flow control feedback to the parent IAB node of the IAB node to indicate congestion. The IAB node receiving the flow control feedback controls a transmission rate for sending downstream data to the child IAB node.

For example, a donor (donor) IAB node may send downlink data to UE through an IAB node 1, an IAB node 2, and an IAB node 3. In a case that a backhaul link between the IAB node 2 and the IAB node 3 is congested, the IAB node 2 sends a flow control feedback (carried in a BAP control PDU) to an upstream node of the IAB node 2, namely, the IAB node 1. After receiving the message, the IAB node 1 stops sending new downlink data to the IAB node 2, or reduces a volume of new downlink data to be sent to the IAB node 2.

The following describes in detail a rerouting method provided in the embodiments of this application with reference to the accompanying drawings and by using specific embodiments and application scenarios thereof.

The embodiments of this application provide a rerouting method. FIG. 4 is a first flowchart of a rerouting method according to an embodiment of this application. As shown in FIG. 4, the method includes the following steps.

Step S402: A first communications node obtains target information, where the target information includes at least one of the following: link state information of a backhaul path associated with the first communications node, and backhaul path identification information.

Step S404: The first communications node determines a target backhaul path based on the target information.

By performing step S402 and step S404, the first communications node may determine the target backhaul path based on the link state information of the backhaul path associated with the first communications node and/or the backhaul path identification information, that is, the first communications node may determine currently available backhaul paths based on the link state information and/or the identification information, and then determine the target backhaul path from the currently available backhaul paths, so that a second communications node can still perform rerouting to select a backhaul path even in a case that no RLF occurs. This makes a rerouting manner more flexible, and resolves a problem in the conventional technology that rerouting is performed only in a case that a radio link failure RLF occurs and therefore only a single manner of enabling rerouting is available.

It should be noted that the backhaul path associated with the first communications node is all backhaul paths associated with the first communications node, and a backhaul path identified by the identification information is an available path configured by the second communications node for the first communications node, and may be all the backhaul paths associated with the first communications node, or may be some of the backhaul paths. For example, the backhaul paths associated with the first communications node include a path 1, a path 2, and a path 3. In this case, the second communications node configures, by using the identification information, only two paths (the path 1 and the path 2) for use.

It should be noted that the first communications node in this embodiment of this application may be a common node in an IAB network, for example, an IAB node or a donor IAB node, and the second communications node in this embodiment of this application may be a CU node in the IAB network.

In addition, it should be further noted that the backhaul path (routing) in this embodiment of this application indicates an entire transmission path, and a backhaul link (link) indicates a specific part of a path (that is, a path between two nodes).

In an optional implementation of this embodiment of this application, in a case that the link state information in this embodiment of this application is downlink state information, that a first communications node obtains link state information of a backhaul path associated with the first communications node in step S402 in this embodiment of this application includes at least one of the following steps.

Step S402-11: The first communications node obtains first link state information of a downlink backhaul link between the first communications node and a downstream node.

Step S402-12: The first communications node receives second link state information reported by a downstream node in a downlink backhaul path, where the second link state information includes at least one of the following: link state information obtained by the downstream node in the downlink backhaul path, and link state information reported by a downstream node of the downstream node in the downlink backhaul path.

It can be learned from step S402-11 and step S402-12 that the downlink state information may include the first link state information and/or the second link state information, that is, the first communications node determines the target backhaul path based on the first link state information and/or the second link state information.

On this basis, the method in this embodiment of this application may further include the following step: Step S406: The first communications node transmits the downlink state information to an upstream node of the first communications node, where the downlink state information includes at least one of the following: the first link state information and the second link state information.

The link state information in this embodiment of this application may include at least one of the following: a redundant capacity (capacity) and a transmission latency (latency). The first communications node transmits the link state information to the upstream node. Therefore, this may be applied to each communications node in the IAB network through extension, and each IAB node may directly forward a reporting message of a downstream IAB node to an upstream node, or report a received reporting message of a downstream IAB node together with a reporting message of the IAB node to an upstream node. In a specific application scenario, in a case that each node receives a latency value from a downstream child node, the node may forward the latency value to an upstream node, or send the latency value together with latencies of the IAB node and a child IAB node in the backhaul path to an upstream node.

It should be noted that, in this embodiment of this application, the redundant capacity may be a redundant rate capacity, the number of bearers for a specific service (for example, video), or a redundant data volume available for buffering.

Further, in this embodiment of this application, a manner of transmitting, by the first communications node, the downlink state information to the upstream node of the first communications node in step S406 includes at least one of the following steps.

Step S406-11: The first communications node transmits a first redundant capacity value to the upstream node, where the first redundant capacity value is a redundant capacity value indicated in the first link state information.

Step S406-12: The first communications node transmits a second redundant capacity value to the upstream node, where the second redundant capacity value is a smaller redundant capacity value of the redundant capacity value indicated in the first link state information and a redundant capacity value indicated in the second link state information.

Step S406-13: The first communications node transmits a first transmission latency value to the upstream node, where the first transmission latency value is a transmission latency value indicated in the first link state information.

Step S406-14: The first communications node transmits a second transmission latency value to the upstream node, where the second transmission latency value is a sum of the transmission latency value indicated in the first link state information and a transmission latency value indicated in the second link state information.

It can be learned from step S406-12 that, for transmission of a redundant capacity of a selectable backhaul path, each IAB node in the backhaul path reports a redundant capacity min { C_{IAB node}, C_{child IAB node}} of a backhaul link in the backhaul path to an upstream node. To be specific, after each IAB node receives a redundant capacity value from a downstream child node, the IAB node compares the redundant capacity value with an estimated redundant capacity value of a backhaul link from the node to a child IAB node in the backhaul path, and then the IAB node transmits a smaller one of the two values to an upstream node.

It can be learned from step S406-14 that, for a downlink transmission latency, after each parent node receives a downlink value from a downstream child node, the parent node adds the downlink value to a transmission latency value, estimated by the node, of a backhaul link between the IAB node and a child IAB node in the backhaul path, and finally transmits only a cumulative transmission latency value to an upstream node.

In another optional implementation of this embodiment of this application, in a case that the link state information is uplink state information, a manner of obtaining, by the first communications node, the link state information of the backhaul path associated with the first communications node in step S402 in this embodiment of this application may include at least one of the following steps.

Step S402-21: The first communications node obtains third link state information, where the third link state information is link state information of a backhaul link between the first communications node and an upstream node.

Step S404-22: The first communications node receives fourth link state information transmitted by an upstream node in an uplink backhaul path, where the fourth link state information includes at least one of the following: link state information obtained by the upstream node in the uplink backhaul path, and link state information transmitted by an upstream node of the upstream node in the uplink backhaul path.

It can be learned from step S402-21 and step S402-22 that the uplink state information may include the third link state information and/or the fourth link state information, that is, the first communications node determines the target backhaul path based on the third first link state information and/or the fourth link state information.

Based on this, the method in this embodiment of this application may further include the following step: Step S408: The first communications node transmits the uplink state information to a downstream node in the backhaul path, where the uplink state information includes at least one of the following: the third link state information and the fourth link state information.

Further, in this embodiment of this application, a manner of transmitting, by the first communications node, the uplink state information to the downstream node in the backhaul path in step S408 includes at least one of the following steps.

Step S408-11: The first communications node transmits a third redundant capacity value to the downstream node, where the third redundant capacity value is a redundant capacity value indicated in the third link state information.

Step S408-12: The first communications node transmits a fourth redundant capacity value to the downstream node, where the fourth redundant capacity value is a smaller redundant capacity value of the redundant capacity value indicated in the third link state information and a redundant capacity value indicated in the fourth link state information.

Step S408-13: The first communications node transmits a third transmission latency value to the downstream node, where the third transmission latency value is a transmission latency value indicated in the third link state information.

Step S408-14: The first communications node transmits a fourth transmission latency value to the downstream node, where the fourth transmission latency value is a sum of the transmission latency value indicated in the third link state information and a transmission latency value indicated in the fourth link state information.

In step S408-12, for a redundant capacity, only min{C_{IAB node}, C_{child IAB node}} is transmitted. To be specific, after each node receives a redundant capacity value from an upstream child node, the node compares the redundant capacity value with an estimated redundant capacity value of a link corresponding to the node, and transmits a smaller one of the two values to a downstream node. That is, a smaller redundant capacity value of each backhaul path is used for selecting a backhaul path with a larger redundant capacity from backhaul paths.

In step S408-14, for an uplink transmission latency, after each IAB node receives a transmission latency value from an upstream node, the IAB node adds the transmission latency value to a transmission latency value estimated by the node, and finally transmits only a cumulative transmission latency value to a downstream node. A transmission latency value is used for determining an available backhaul path, that is, a backhaul path with a small transmission latency value is selected.

In an optional implementation of this embodiment of this application, in a case that the link state information includes at least one of the following: a redundant capacity and a transmission latency, a manner of determining, by the first communications node, the target backhaul path based on the target information in step S402 in this application may further include the following steps.

Step S21: The first communications node determines target link state information from the link state information, where the target link state meets at least one of the following conditions: the redundant capacity is greater than a first preset threshold, and the transmission latency is less than a second preset threshold.

Step S22: The first communications node determines the target backhaul path based on the target link state information.

It should be noted that the first preset threshold and the second preset threshold are determined according to a transmission requirement of a to-be-transmitted data packet. That is, different first thresholds and second thresholds may be determined based on different to-be-transmitted packets.

In a specific application scenario, in a case that the first communications node receives a congestion indication regarding a selectable backhaul path, the first communications node reduces a redundant capacity of the path or sets a redundant capacity of the path to 0, and selects a corresponding backhaul path based on an updated redundant capacity. That is, a redundant capacity of a current selectable backhaul path may be updated as appropriate.

In another optional implementation of this embodiment of this application, before the first communications node obtains the target information in step S402, the method in this embodiment of this application may further include the following steps.

Step S410: The first communications node obtains the link state information of the backhaul link associated with the first communications node.

Step S412: The first communications node transmits, to a second communications node, the link state information of the backhaul link associated with the first communications node, where the second communications node is a node controlling all first communications nodes in a communications system.

In step S410 and step S412, if the first communications node is a node in an IAB network, the second communications node is a CU node in the IAB network, and the CU node receives link state information sent by other IAB nodes in the IAB network, where the link state information may be used for determining an available backhaul path in the IAB network.

Based on this, the first communications node receives identification information sent by the second communications node, where the identification information is used to indicate a backhaul path selected for transmitting a data packet in the communications system. The first communications node can determine currently available backhaul paths by using the identification information, and then select, according to a service requirement of a to-be-transmitted data packet, an available backhaul path from the available backhaul paths for data offloading, thereby ensuring that the selected backhaul path is available.

It should be noted that the method in this embodiment of this application further includes the following step: The first communications node receives first configuration information sent by the second communications node, where the first configuration information is used to indicate a redundant capacity and/or transmission latency of the backhaul path. That is, the second communications node may further notify the first communications node of the redundant capacity and/or the transmission latency of the backhaul path while notifying the first communications node of the backhaul path identification information. By using the redundant capacity and/or the transmission latency for local rerouting, the first communications node can select a better backhaul path, that is, a path with a low transmission latency and a large redundant capacity, from available backhaul paths.

In an optional implementation of this embodiment of this application, the link state information in this embodiment of this application is transmitted between a plurality of communications nodes and is carried in at least one of the following messages: a radio resource control (Radio Resource Control, RRC) message, an F1-C message, a backhaul adaptation protocol BAP control protocol data unit (Protocol Data Unit, PDU), and a media access control (Media Access Control, MAC)-control element (Control Element, CE).

In addition, a format for carrying the link state information in this embodiment of this application includes at least one of the following fields: a redundant capacity, a transmission latency, a backhaul link identifier, and a backhaul adaptation protocol BAP routing identifier. The format of the message includes a plurality of entries, where each entry is used to indicate at least one of the following: information of the backhaul link identifier and information of the backhaul adaptation protocol BAP routing identifier.

In the foregoing embodiments, this application is described from the first communications node side. The following describes this application from the second communications node side.

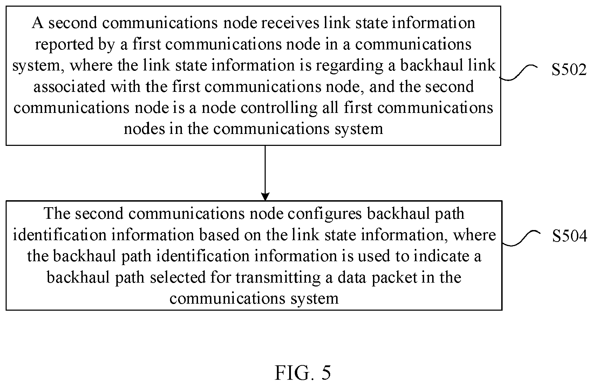

An embodiment of this application further provides a rerouting method. FIG. 5 is a second flowchart of a rerouting method according to an embodiment of this application. As shown in FIG. 5, the method includes the following steps.

Step S502: A second communications node receives link state information reported by a first communications node in a communications system, where the link state information is regarding a backhaul link associated with the first communications node, and the second communications node is a node controlling all first communications nodes in the communications system.

Step S504: The second communications node configures backhaul path identification information based on the link state information, where the backhaul path identification information is used to indicate a backhaul path selected for transmitting a data packet in the communications system.

It can be learned from step S502 and step S504 that, after receiving the link state information transmitted by the first communications node, the second communications node may determine an available backhaul path in the communications system based on the link state information, and notify the first communications node of the backhaul path identification information, so that the second communications node can still perform rerouting to select a backhaul path even in a case that no RLF occurs. This makes a rerouting manner more flexible, and resolves a problem in the conventional technology that rerouting is performed only in a case that a radio link failure RLF occurs and therefore only a single manner of enabling rerouting is available.

In an optional implementation of this embodiment of this application, the method in this embodiment of this application may further include the following steps.

Step S506: The second communications node sends first configuration information to the first communications node, where the first configuration information is used to indicate a redundant capacity and/or transmission latency of the backhaul path. That is, the second communications node may further notify the first communications node of the redundant capacity and/or the transmission latency corresponding to the backhaul path while notifying the first communications node of the backhaul path identification information. By using the redundant capacity and/or the transmission latency for local rerouting, the first communications node can select a better backhaul path, that is, a path with a low transmission latency and a large redundant capacity, from available backhaul paths for a to-be-transmitted data packet.

In an optional implementation of this embodiment of this application, before the second communications node receives the link state information reported by the first communications node in the communications system, the method in this embodiment of this application may further include the following steps.

Step S508: The second communications node sends second configuration information to the first communications node, where the second configuration information is used to indicate at least one of the following: triggering the first communications node to report the link state information, and the first communications node enabling a local rerouting function.

The second configuration information can indicate the first communications node to report specific link state information, such as a redundant capacity or a transmission latency, and indicate the first communications node whether to enable the local rerouting function.

A manner of the triggering may include at least one of the following: periodic triggering, event triggering, and triggering by polling.

The periodicity may be preset by the second communications node, or may be specified by a protocol. The event triggering includes at least one of the following events: the link state information meeting a preset condition, reception of a link state information message sent by another communications node, and reception of a traffic control feedback message. For example, a redundant capacity or a redundant capacity change of a link exceeds a specific threshold, a flow control feedback (flow control feedback) message is received, or a link state information message sent by a child node or a parent node is received. The being triggered by polling may be that an IAB-donor-CU or an IAB-donor-DU/IAB node sends trigger signaling.

It should be noted that the link state information in this embodiment of this application has validity duration on the second communications node. In a specific application scenario, a validity time of the link state information on the second communications node is at least one of the following: (1) a preset duration after the link state information is received, where the preset duration is determined by the second communications node or is specified by a protocol; and (2) from reception of the link state information to reception of next link state information that carries the same backhaul link identifier or BAP routing identifier.

The following describes this application by using an example with reference to a specific implementation of this application. In the specific implementation, an IAB network is used as an example. A first communications node is a common node (an IAB node or a donor DU) in the IAB network, and a second communications node is a CU node in the IAB network.

In the specific implementation, first, the CU configures IAB nodes by using RRC signaling; or configures an IAB-donor-DU by using F1 signaling and then configures state information of a selectable backhaul path, where the configuration includes at least one of the following:
(a) to-be-reported state information of a selectable backhaul path is configured to be a downlink redundant capacity and transmission latency;
(b) the information is configured to be triggered by reception of a downlink flow control feedback message, and corresponding information reporting is also triggered when an IAB node receives link state information sent by another node;
(c) the configuration implicitly indicates that IAB node or an IAB-donor-DU node enables a local rerouting function, that is, an IAB node receiving the configuration can reroute downlink data packets based on information of a selectable backhaul path in the IAB network regarding that node; and
(d) a validity time after the state information of the selectable backhaul path is received is as follows: the information is considered valid until reception of state information of a next selectable backhaul path.

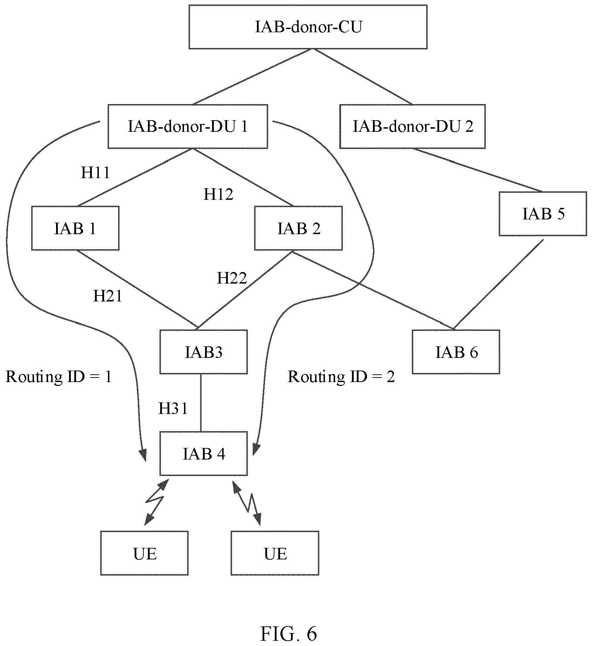

As shown in FIG. 6, the following transmission path (it is assumed that a routing ID is 1) is used as an example: an IAB-donor-CU -> an IAB-donor-DU 1 -> an IAB 1-> an IAB 3 -> an IAB 4. First, the IAB 4 triggers a DL HbH flow control feedback message, and sends the message to the IAB 3, to trigger the IAB 3 to report state information of a selectable backhaul link. The IAB 3 estimates that a capacity and a latency of a downlink link H31 of the IAB 3 are C31 and L31 respectively, and reports the capacity and the latency to the IAB 1 by using a BAP control PDU. The IAB 1 receives state information of a selectable backhaul link that is sent by a child node, and the IAB 1 is also triggered to report a link state information. The IAB 1 estimates that a capacity and a latency of a downlink link H21 of the IAB 1 are C21 and L21 respectively, and reports the capacity and the latency to the IAB-donor-DU 1 by using a BAP control PDU. However, for the capacity, only a minimum value of C21 and C31 is reported; and for the transmission latency, a sum of the two values, that is, L21 + L31, is reported.

Further, the IAB-donor-DU 1 receives state information of a selectable backhaul link that is sent by the IAB 1, and the IAB-donor-DU 1 is triggered to report link state information. The IAB-donor-DU 1 estimates that a redundant capacity and a transmission latency of a downlink link H11 of the IAB-donor-DU 1 are C11 and L11 respectively. In FIG. 6, a downlink link from the IAB-donor-DU 1 to the IAB 2 is H12. The IAB-donor-DU 1 may report received state information of selectable backhaul links of all downstream nodes to the IAB-donor-CU by using F1 signaling. In this case, for the capacity, a minimum value of C11 and min{C21, C31} is reported; and for the transmission latency, a sum of the two values, that is, L11 + (L21 + L31), is reported. Finally, the IAB-donor-CU adjusts a data packet routing mapping configuration based on state information of each link in the IAB network, and sends a modified configuration to each node in a topology by using F1 signaling. The IAB-donor-DU 1 reroutes data based on the modified configuration.

Alternatively, the IAB-donor-DU 1 does not report state information of a selectable backhaul link of a downstream node to the IAB-donor-CU, but selects a path most suitable for a current to-be-transmitted data packet based on link state information of each path (for example, a path routing ID is 2, that is, the IAB-donor-DU 1 -> the IAB 2 -> the IAB3 -> the IAB 4) that is obtained by the IAB-donor-DU 1, and reroutes the data packet (rerouting does not need to be performed if an ID of the path selected for transmitting the data packet is the same as a path ID carried in a packet header of the original data packet). If downstream link state information received by the IAB-donor-DU 1 indicates that an available capacity of a path indicated by a routing ID 1 is greater than that of a path indicated by the routing ID 2 and a total latency of the path indicated by the routing ID 1 is less than that of the path indicated by the routing ID 2, the IAB-donor-DU 1 may autonomously reroute data that needs to be transmitted to the IAB 4 (if a data packet configured by the IAB-donor-CU is transmitted through the path indicated by the routing ID 2), and send the data through the path indicated by the routing ID 1.

It should be noted that, in addition to the IAB-donor-DU 1, any node with a plurality of transmission paths may perform rerouting (provided that an original data packet can be transmitted to a destination IAB node through another transmission path of the IAB node).

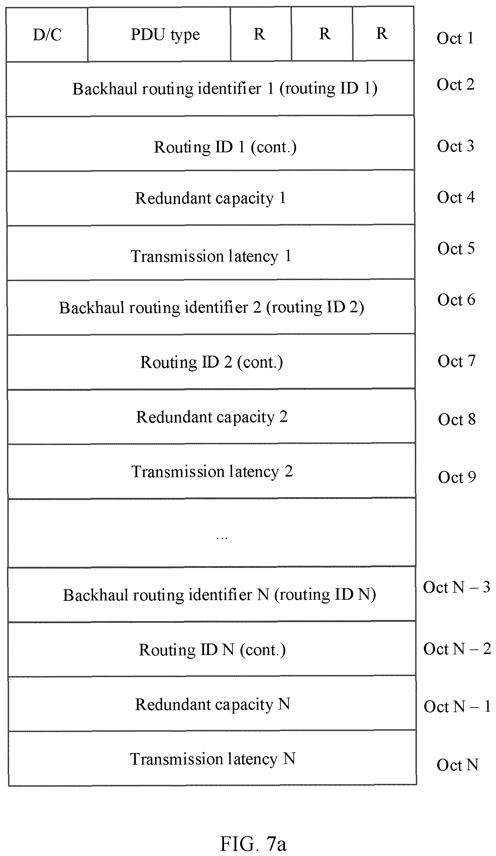

In addition, backhaul link state information in this embodiment of this application may be carried in an F 1 or RRC message, or may be carried in a BAP control PDU or a MAC CE. In this application, the BAP control PDU is described as an example. As shown in FIG. 7a, link state information is reported per BAP routing ID. Details are described as follows.
(1) A PDU type (type) indicates a type of a PDU. Current PDU types in use are shown in Table 1.

**Table 1**

| Bit | Description |
|---|---|
| 0000 | Traffic control feedback for an RLC channel per backhaul link |
| 0001 | Flow control feedback per BAP routing ID |
| 0010 | Flow control feedback polling |
| 0011 | Backhaul Link RLF indication |
| 0100-1111 | Reserved |

For downlink state information reporting, a PDU type may be indicated by using any reserved value from 0100 to 1111; or a flow control feedback message format in a first communications protocol is enhanced, for example, a PDU type is indicated by using 0001, and one R bit is used to indicate that a current message is a message of a different protocol. Specifically, if the first R bit in the first byte in FIG. 7a being 1 is used for distinguishing, an IAB in the first communications protocol reads the R bit. The bit being 1 indicates that a message with a PDU type of "0001" is used for carrying downlink state information. The bit being 0 still indicates the flow control feedback format in the first communications protocol.

(2) For uplink state information reporting, a PDU type may be indicated by using a reserved value from 0100 to 1111; or a PDU type value (a reserved value from 0100 to 1111) that is the same as that used in downlink state information reporting may be used, but one R bit is used for distinguishing between the uplink state information reporting and the downlink state information reporting.

(3) For each backhaul path, a redundant capacity and/or a transmission latency may be carried based on a configuration of the CU. In addition, it should be noted that each message may carry link state information of a plurality of backhaul paths. The carried redundant capacity may be a smallest value in all link state information in the path, and the carried transmission latency may be a sum of transmission latencies in all link state information in the path.

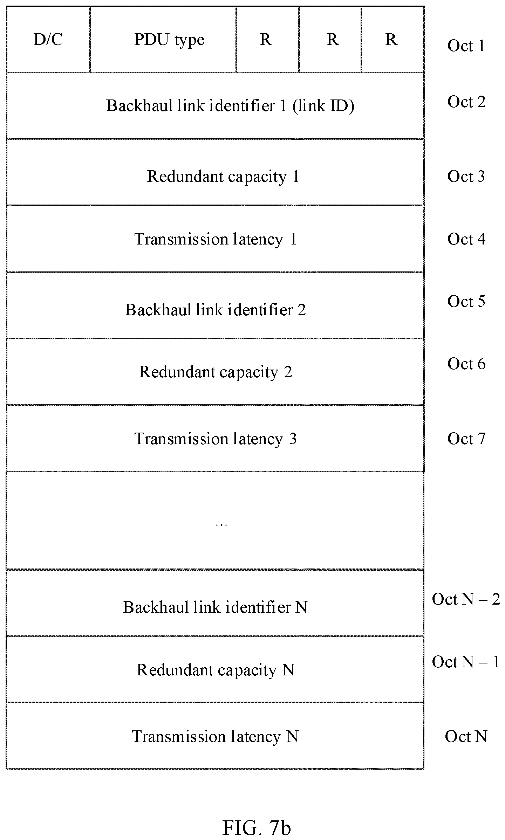

As shown in FIG. 7b, link state information is reported per link ID. Details are described as follows.
(1) For downlink state information reporting, a PDU type may be indicated by using any reserved value from 0100 to 1111 (a value different from that in FIG. 7a, or a PDU type value different from that used in state information reporting per BAP routing ID).
(2) For uplink state information reporting, a PDU type may be indicated by using a reserved value from 0100 to 1111; or a same reserved value may be used, but one R bit is used for distinguishing between uplink and downlink.
(3) For each link ID, a redundant capacity and/or a transmission latency may be carried based on a configuration of the CU. In addition, it should be noted that each message may carry link state information of a plurality of link IDs.
(4) The carried capacity and latency are estimated link state values for the link ID.

In the specific implementations of this application, an IAB node or an IAB-donor-DU node can receive link state information report associated with the node, and therefore can autonomously select an optimal transmission path for rerouting a data packet and determine a volume of data to be carried in another path, so as to ensure reliability of data transmission.

It should be noted that the rerouting method provided in the embodiments of this application may be performed by a rerouting apparatus, or by a control module that is in the rerouting apparatus and that is configured to perform the rerouting method. In the embodiments of this application, a rerouting apparatus provided in the embodiments of this application is described by using an example in which the rerouting apparatus performs the rerouting method.

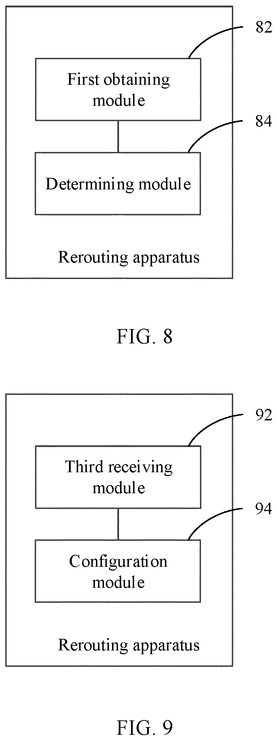

An embodiment of this application provides a rerouting apparatus, used in a first communications node. As shown in FIG. 8, the apparatus includes:
a first obtaining module 82, configured to obtain target information, where the target information includes at least one of the following: link state information of a backhaul path associated with the first communications node, and backhaul path identification information; and
a determining module 84, configured to determine a target backhaul path based on the target information.

The apparatus in this embodiment of this application may determine the target backhaul path based on the link state information of the backhaul path associated with the first communications node and/or the identification information of the backhaul path, that is, the first communications node may determine a currently available backhaul path based on the link state information and the identification information, and then determine the target backhaul path from the currently available backhaul path, so that the second communications node can still perform rerouting to select a backhaul path even in a case that no RLF occurs. This makes a rerouting manner more flexible, and resolves a problem in the conventional technology that rerouting is performed only in a case that a radio link failure RLF occurs and therefore only a single manner of enabling rerouting is available.

Optionally, in a case that the link state information is downlink state information, the first obtaining module 82 in this embodiment of this application may further include at least one of the following:
a first obtaining unit, configured to obtain first link state information of a downlink backhaul link between the first communications node and a downstream node; and
a first receiving unit, configured to receive second link state information reported by a downstream node in a downlink backhaul path, where the second link state information includes at least one of the following: link state information obtained by the downstream node in the downlink backhaul path, and link state information reported by a downstream node of the downstream node in the downlink backhaul path.

Optionally, the apparatus in this embodiment of this application may further include: a first transmission module, configured to transmit the downlink state information to an upstream node of the first communications node, where the downlink state information includes at least one of the following: the first link state information and the second link state information.

Optionally, the first transmission module in this embodiment of this application may include at least one of the following:
a first transmission unit, configured to transmit a first redundant capacity value to the upstream node, where the first redundant capacity value is a redundant capacity value indicated in the first link state information;
a second transmission unit, configured to transmit a second redundant capacity value to the upstream node, where the second redundant capacity value is a smaller redundant capacity value of the redundant capacity value indicated in the first link state information and a redundant capacity value indicated in the second link state information;
a third transmission unit, configured to transmit a first transmission latency value to the upstream node, where the first transmission latency value is a transmission latency value indicated in the first link state information; and
a fourth transmission unit, configured to transmit a second transmission latency value to the upstream node, where the second transmission latency value is a sum of the transmission latency value indicated in the first link state information and a transmission latency value indicated in the second link state information.

Optionally, in a case that the link state information is uplink state information, the first obtaining module 82 in this embodiment of this application may further include at least one of the following:
a second obtaining unit, configured to obtain third link state information, where the third link state information is link state information of a backhaul link between the first communications node and an upstream node; and
a second receiving unit, configured to receive fourth link state information transmitted by an upstream node in an uplink backhaul path, where the fourth link state information includes at least one of the following: link state information obtained by the upstream node in the uplink backhaul path, and link state information transmitted by an upstream node of the upstream node in the uplink backhaul path.

Optionally, the apparatus in this embodiment of this application may further include: a second transmission module, configured to transmit the uplink state information to a downstream node in the backhaul path, where the uplink state information includes at least one of the following: the third link state information and the fourth link state information.

Optionally, the second transmission module in this embodiment of this application may further include at least one of the following:
a fifth transmission unit, configured to transmit a third redundant capacity value to the downstream node, where the third redundant capacity value is the redundant capacity value indicated in the third link state information;
a sixth transmission unit, configured to transmit a fourth redundant capacity value to the downstream node, where the fourth redundant capacity value is a smaller redundant capacity value of the redundant capacity value indicated in the third link state information and a redundant capacity value indicated in the fourth link state information;
a seventh transmission unit, configured to transmit a third transmission latency value to the downstream node, where the third transmission latency value is a transmission latency value indicated in the third link state information; and
an eighth transmission unit, configured to transmit a fourth transmission latency value to the downstream node, where the fourth transmission latency value is a sum of the transmission latency value indicated in the third link state information and a transmission latency value indicated in the fourth link state information.

Optionally, in a case that the link state information includes at least one of the following: a redundant capacity and a transmission latency, the determining module 84 in this embodiment of this application may further include: a first determining unit, configured to determine target link state information from the link state information, where the target link state meets at least one of the following conditions: the redundant capacity is greater than a first preset threshold, and the transmission latency is less than a second preset threshold; and a second determining unit, configured to determine the target backhaul path based on the target link state information.

The first preset threshold and the second preset threshold are determined according to a transmission requirement of a to-be-transmitted data packet.

Optionally, the apparatus in this embodiment of this application may further include: a second obtaining module, configured to: before the target information is obtained, obtain the link state information of the backhaul link associated with the first communications node; and a third transmission module, configured to transmit, to a second communications node, the link state information of the backhaul link associated with the first communications node, where the second communications node is a node controlling all first communications nodes in a communications system.

Optionally, the apparatus in this embodiment of this application may further include: a first receiving module, configured to receive identification information sent by the second communications node, where the identification information is used to indicate a backhaul path selected for transmitting a data packets in the communications system.

Optionally, the apparatus in this embodiment of this application may further include: a second receiving module, configured to receive first configuration information sent by the second communications node, where the first configuration information is used to indicate a redundant capacity and/or transmission latency of the backhaul path.

Optionally, the link state information in this embodiment of this application is transmitted between a plurality of communications nodes and is carried in at least one of the following messages: a radio resource control RRC message, an F1-C message, a backhaul adaptation protocol BAP control protocol data unit PDU, and a media access control-control element.

Optionally, a format of the message in this embodiment of this application includes at least one of the following fields: a redundant capacity, a transmission latency, a backhaul link identifier, and a backhaul adaptation protocol BAP routing identifier.

Optionally, the format of the message in this embodiment of this application includes a plurality of entries, where each entry is used to indicate at least one of the following: information of the backhaul link identifier and information of the backhaul adaptation protocol BAP routing identifier.

The foregoing embodiment is described from a perspective of an apparatus used in the first communications node, and the following provides descriptions from a perspective of an apparatus used in the second communications node.

An embodiment of this application provides a rerouting apparatus, used in a second communications node. As shown in FIG. 9, the apparatus includes:
a third receiving module 92, configured to receive link state information reported by a first communications node in a communications system, where the link state information is regarding a backhaul link associated with the first communications node, where the second communications node is a node controlling all first communications nodes in the communications system; and
a configuration module 94, configured to configure backhaul path identification information based on the link state information, where the backhaul path identification information is used to indicate a backhaul path selected for transmitting a data packet in the communications system.

After receiving the link state information transmitted by the first communications node, the apparatus used in the second communications node in this embodiment of this application may determine an available backhaul path in the communications system based on the link state information, and notify the first communications node of the backhaul path identification information, so that the second communications node can still perform rerouting to select a backhaul path even in a case that no RLF occurs. This makes a rerouting manner more flexible, and resolves a problem in the conventional technology that rerouting is performed only in a case that a radio link failure RLF occurs and therefore only a single manner of enabling rerouting is available.

Optionally, the apparatus in this embodiment of this application may further include: a first sending module, configured to send first configuration information to the first communications node, where the first configuration information is used to indicate a redundant capacity and/or transmission latency of the backhaul path.

Optionally, the apparatus in this embodiment of this application may further include: a second sending module, configured to: before the link state information reported by the first communications node in the communications system is received, send second configuration information to the first communications node, where the second configuration information is used to indicate at least one of the following: triggering the first communications node to report the link state information, and the first communications node enabling a local rerouting function.

Optionally, a manner of the triggering in this embodiment of this application includes at least one of the following: periodic triggering, event triggering, and triggering by polling.

Optionally, the event triggering in this embodiment of this application includes at least one of the following events: the link state information meeting a preset condition, reception of a link state information message sent by another communications node, and reception of a traffic control feedback message.

Optionally, a validity time of the link state information on the second communications node in this embodiment of this application is at least one of the following: (1) a preset duration after the link state information is received, where the preset duration is determined by the second communications node or is specified by a protocol; and (2) from reception of the link state information to reception of next link state information that carries the same link identifier or BAP routing identifier.

The rerouting apparatus in the embodiments of this application may be an apparatus, or may be a component, an integrated circuit, or a chip in a terminal. The apparatus may be a mobile terminal or a non-mobile terminal. For example, the mobile terminal may include but is not limited to the aforementioned types of the terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The rerouting apparatus in the embodiments of this application may be an apparatus with an operating system. The operating system may be an Android (Android) operating system, may be an iOS operating system, or may be another possible operating system. This is not specifically limited in the embodiments of this application.

The rerouting apparatus provided in the embodiments of this application is capable of implementing the processes implemented in the method embodiments of FIG. 4 and FIG. 5, with the same technical effects achieved. To avoid repetition, details are not described herein again.

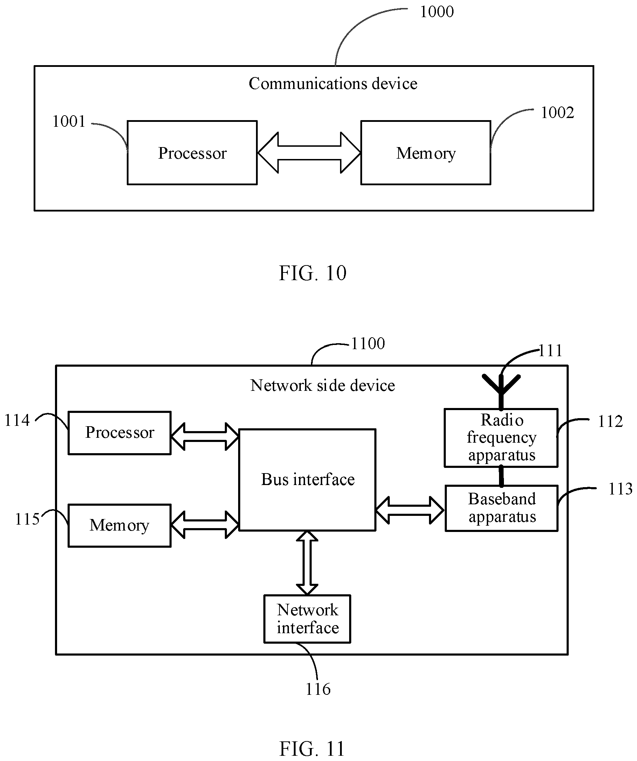

Optionally, as shown in FIG. 10, an embodiment of this application further provides a communications device 1000, including a processor 1001, a memory 1002, and a program or instructions stored in the memory 1002 and capable of running on the processor 1001. For example, when the communications device 1000 is a terminal, and when the program or instructions are executed by the processor 1001, the processes of the foregoing rerouting method embodiments are implemented, with the same technical effects achieved. When the communications device 1000 is a network side device, and when the program or instructions are executed by the processor 1001, the processes of the foregoing rerouting method embodiments are implemented, with the same technical effects achieved. To avoid repetition, details are not described herein again.

Specifically, an embodiment of this application further provides a network side device. As shown in FIG. 11, the network device 1100 includes an antenna 111, a radio frequency apparatus 112, and a baseband apparatus 113. The antenna 111 is connected to the radio frequency apparatus 112. In an uplink direction, the radio frequency apparatus 112 receives information through the antenna 111, and transmits the received information to the baseband apparatus 113 for processing. In a downlink direction, the baseband apparatus 113 processes to-be-transmitted information, and transmits the information to the radio frequency apparatus 112; and the radio frequency apparatus 112 processes the received information and then transmits the information through the antenna 111.

The frequency band processing apparatus may be located in the baseband apparatus 113. The method performed by the network side device in the foregoing embodiments may be implemented by the baseband apparatus 113, and the baseband apparatus 113 includes a processor 114 and a memory 115.

The baseband apparatus 113 may include, for example, at least one baseband processing unit, where a plurality of chips are disposed on the baseband processing unit. As shown in FIG. 11, one of the chips is, for example, the processor 114, and connected to the memory 115, to invoke the program in the memory 115 to perform the operations of the network device shown in the foregoing method embodiments.

The baseband apparatus 113 may further include a network interface 116, configured to exchange information with the radio frequency apparatus 112. The interface is, for example, a common public radio interface (common public radio interface, CPRI for short).

Specifically, the network side device in this embodiment of the present invention further includes instructions or a program stored in the memory 115 and capable of running on the processor 114, and the processor 114 invokes the instructions or program in the memory 115 to perform the method performed by the modules shown in FIG. 8 or FIG. 9, with the same technical effects achieved. To avoid repetition, details are not described herein again.

An embodiment of this application further provides a readable storage medium. The readable storage medium stores a program or instructions. When the program or instructions are executed by a processor, the processes of the foregoing rerouting method embodiments are implemented, with the same technical effects achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor. The processor is configured to run a program or instructions for a network side device, to implement the processes of the foregoing rerouting method embodiments, with the same technical effects achieved. To avoid repetition, details are not described herein again.

An embodiment of this application provides a computer program product. The program product is stored in a non-volatile storage medium. The program product is executed by at least one processor to implement the processes of the foregoing rerouting method embodiments, with the same technical effects achieved. To avoid repetition, details are not described herein again.

An embodiment of this application provides a communications device, configured to perform the processes of the foregoing rerouting method embodiments, with the same technical effects achieved. To avoid repetition, details are not described herein again.

It should be understood that the chip provided in the embodiments of this application may also be referred to as a system-level chip, a system on chip, a chip system, a system-on-a-chip, or the like.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a... " does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing description of the implementations, persons skilled in the art may clearly understand that the methods in the foregoing embodiments may be implemented by using software in combination with a necessary common hardware platform, and certainly may be alternatively implemented by using hardware. However, in most cases, the former is a preferred implementation. Based on such an understanding, the technical solutions of this application essentially or the part contributing to the related art may be implemented in a form of a software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific implementations. The foregoing specific implementations are merely illustrative rather than restrictive. As instructed by this application, persons of ordinary skill in the art may develop many other manners without departing from principles of this application and the protection scope of the claims, and all such manners fall within the protection scope of this application.

## Claims

1. A rerouting method, comprising:
obtaining, by a first communications node, target information, wherein the target information comprises at least one of the following: link state information of a backhaul path associated with the first communications node, and backhaul path identification information; and
determining, by the first communications node, a target backhaul path based on the target information.

2. The method according to claim 1, wherein in a case that the link state information is downlink state information, the obtaining, by a first communications node, link state information of a backhaul path associated with the first communications node comprises at least one of the following:
obtaining, by the first communications node, first link state information of a downlink backhaul link between the first communications node and a downstream node; and
receiving, by the first communications node, second link state information reported by a downstream node in a downlink backhaul path, wherein the second link state information comprises at least one of the following: link state information obtained by the downstream node in the downlink backhaul path, and link state information reported by a downstream node of the downstream node in the downlink backhaul path.

3. The method according to claim 2, wherein the method further comprises:
transmitting, by the first communications node, the downlink state information to an upstream node of the first communications node, wherein the downlink state information comprises at least one of the following: the first link state information and the second link state information.

4. The method according to claim 3, wherein the transmitting, by the first communications node, the downlink state information to an upstream node of the first communications node comprises at least one of the following:
transmitting, by the first communications node, a first redundant capacity value to the upstream node, wherein the first redundant capacity value is a redundant capacity value indicated in the first link state information;
transmitting, by the first communications node, a second redundant capacity value to the upstream node, wherein the second redundant capacity value is a smaller redundant capacity value of the redundant capacity value indicated in the first link state information and a redundant capacity value indicated in the second link state information;
transmitting, by the first communications node, a first transmission latency value to the upstream node, wherein the first transmission latency value is a transmission latency value indicated in the first link state information; and
transmitting, by the first communications node, a second transmission latency value to the upstream node, wherein the second transmission latency value is a sum of the transmission latency value indicated in the first link state information and a transmission latency value indicated in the second link state information.

5. The method according to claim 1, wherein in a case that the link state information is uplink state information, the obtaining, by a first communications node, link state information of a backhaul path associated with the first communications node comprises at least one of the following:
obtaining, by the first communications node, third link state information, wherein the third link state information is link state information of a backhaul link between the first communications node and an upstream node; and
receiving, by the first communications node, fourth link state information transmitted by an upstream node in an uplink backhaul path, wherein the fourth link state information comprises at least one of the following: link state information obtained by the upstream node in the uplink backhaul path, and link state information transmitted by an upstream node of the upstream node in the uplink backhaul path.

6. The method according to claim 5, wherein the method further comprises:
transmitting, by the first communications node, the uplink state information to a downstream node in the backhaul path, wherein the uplink state information comprises at least one of the following: the third link state information and the fourth link state information.

7. The method according to claim 6, wherein the transmitting, by the first communications node, the uplink state information to a downstream node in the backhaul path comprises at least one of the following:
transmitting, by the first communications node, a third redundant capacity value to the downstream node, wherein the third redundant capacity value is a redundant capacity value indicated in the third link state information;
transmitting, by the first communications node, a fourth redundant capacity value to the downstream node, wherein the fourth redundant capacity value is a smaller redundant capacity value of the redundant capacity value indicated in the third link state information and a redundant capacity value indicated in the fourth link state information;
transmitting, by the first communications node, a third transmission latency value to the downstream node, wherein the third transmission latency value is a transmission latency value indicated in the third link state information; and
transmitting, by the first communications node, a fourth transmission latency value to the downstream node, wherein the fourth transmission latency value is a sum of the transmission latency value indicated in the third link state information and a transmission latency value indicated in the fourth link state information.

8. The method according to claim 1, wherein in a case that the link state information comprises at least one of the following: a redundant capacity and a transmission latency, the determining, by the first communications node, a target backhaul path based on the target information comprises:
determining, by the first communications node, target link state information from the link state information, wherein the target link state meets at least one of the following conditions: the redundant capacity is greater than a first preset threshold, and the transmission latency is less than a second preset threshold; and
determining, by the first communications node, the target backhaul path based on the target link state information.

9. The method according to claim 8, wherein the first preset threshold and the second preset threshold are determined according to a transmission requirement of a to-be-transmitted data packet.

10. The method according to claim 1, wherein before the obtaining, by a first communications node, target information, the method further comprises:
obtaining, by the first communications node, the link state information of the backhaul link associated with the first communications node; and
transmitting, by the first communications node to a second communications node, the link state information of the backhaul link associated with the first communications node, wherein the second communications node is a node controlling all first communications nodes in a communications system.

11. The method according to claim 10, wherein the method further comprises:
receiving, by the first communications node, backhaul path identification information sent by the second communications node, wherein the backhaul path identification information is used to indicate a backhaul path selected for transmitting a data packet in the communications system.

12. The method according to claim 11, wherein the method further comprises:
receiving, by the first communications node, first configuration information sent by the second communications node, wherein the first configuration information is used to indicate a redundant capacity and/or transmission latency of the backhaul path.

13. The method according to claim 8, wherein the link state information is transmitted between a plurality of communications nodes and is carried in at least one of the following messages: a radio resource control RRC message, an F1-C message, a backhaul adaptation protocol BAP control protocol data unit PDU, and a media access control-control element.

14. The method according to claim 13, wherein a format of the message comprises at least one of the following fields: a redundant capacity, a transmission latency, a backhaul link identifier, and a BAP routing identifier.

15. The method according to claim 14, wherein the format of the message comprises a plurality of entries, wherein each entry is used to indicate at least one of the following: information of the backhaul link identifier and information of the BAP routing identifier.

16. A rerouting method, comprising:
receiving, by a second communications node, link state information reported by a first communications node in a communications system, wherein the link state information is regarding a backhaul link associated with the first communications node, and the second communications node is a node controlling all first communications nodes in the communications system; and
configuring, by the second communications node, backhaul path identification information based on the link state information, wherein the backhaul path identification information is used to indicate a backhaul path selected for transmitting a data packet in the communications system.

17. The method according to claim 16, wherein the method further comprises:
sending, by the second communications node, first configuration information to the first communications node, wherein the first configuration information is used to indicate a redundant capacity and/or transmission latency of the backhaul path.

18. The method according to claim 16, wherein before the receiving, by a second communications node, link state information reported by a first communications node in a communications system, the method comprises:
sending, by the second communications node, second configuration information to the first communications node, wherein the second configuration information is used to indicate at least one of the following: triggering the first communications node to report the link state information, and the first communications node enabling a local rerouting function.

19. The method according to claim 18, wherein a manner of the triggering comprises at least one of the following: periodic triggering, event triggering, and triggering by polling.

20. The method according to claim 19, wherein the event triggering comprises at least one of the following events: the link state information meeting a preset condition, reception of a link state information message sent by another communications node, and reception of a traffic control feedback message.

21. The method according to claim 16, wherein a validity time of the link state information on the second communications node is at least one of the following:
a preset duration after the link state information is received, wherein the preset duration is determined by the second communications node or is specified by a protocol; and
from reception of the link state information to reception of next link state information that carries the same backhaul link identifier or BAP routing identifier.

22. A rerouting apparatus, used in a first communications node, comprising:
a first obtaining module, configured to obtain target information, wherein the target information comprises at least one of the following: link state information of a backhaul path associated with the first communications node, and backhaul path identification information; and
a determining module, configured to determine a target backhaul path based on the target information.

23. The apparatus according to claim 22, wherein in a case that the link state information is downlink state information, the first obtaining module comprises at least one of the following:
a first obtaining unit, configured to obtain first link state information of a downlink backhaul link between the first communications node and a downstream node; and
a first receiving unit, configured to receive second link state information reported by a downstream node in a downlink backhaul path, wherein the second link state information comprises at least one of the following: link state information obtained by the downstream node in the downlink backhaul path, and link state information reported by a downstream node of the downstream node in the downlink backhaul path.

24. The apparatus according to claim 23, wherein the apparatus further comprises:
a first transmission module, configured to transmit the downlink state information to an upstream node of the first communications node, wherein the downlink state information comprises at least one of the following: the first link state information and the second link state information.

25. The apparatus according to claim 24, wherein the first transmission module comprises at least one of the following:
a first transmission unit, configured to transmit a first redundant capacity value to the upstream node, wherein the first redundant capacity value is a redundant capacity value indicated in the first link state information;
a second transmission unit, configured to transmit a second redundant capacity value to the upstream node, wherein the second redundant capacity value is a smaller redundant capacity value of the redundant capacity value indicated in the first link state information and a redundant capacity value indicated in the second link state information;
a third transmission unit, configured to transmit a first transmission latency value to the upstream node, wherein the first transmission latency value is a transmission latency value indicated in the first link state information; and
a fourth transmission unit, configured to transmit a second transmission latency value to the upstream node, wherein the second transmission latency value is a sum of the transmission latency value indicated in the first link state information and a transmission latency value indicated in the second link state information.

26. The apparatus according to claim 22, wherein in a case that the link state information is uplink state information, the first obtaining module comprises at least one of the following:
a second obtaining unit, configured to obtain third link state information, wherein the third link state information is link state information of a backhaul link between the first communications node and an upstream node; and
a second receiving unit, configured to receive fourth link state information transmitted by an upstream node in an uplink backhaul path, wherein the fourth link state information comprises at least one of the following: link state information obtained by the upstream node in the uplink backhaul path, and link state information transmitted by an upstream node of the upstream node in the uplink backhaul path.

27. The apparatus according to claim 26, wherein the apparatus further comprises:
a second transmission module, configured to transmit the uplink state information to a downstream node in the backhaul path, wherein the uplink state information comprises at least one of the following: the third link state information and the fourth link state information.

28. The apparatus according to claim 27, wherein the second transmission module comprises at least one of the following:
a fifth transmission unit, configured to transmit a third redundant capacity value to the downstream node, wherein the third redundant capacity value is the redundant capacity value indicated in the third link state information;
a sixth transmission unit, configured to transmit a fourth redundant capacity value to the downstream node, wherein the fourth redundant capacity value is a smaller redundant capacity value of the redundant capacity value indicated in the third link state information and a redundant capacity value indicated in the fourth link state information;
a seventh transmission unit, configured to transmit a third transmission latency value to the downstream node, wherein the third transmission latency value is a transmission latency value indicated in the third link state information; and
an eighth transmission unit, configured to transmit a fourth transmission latency value to the downstream node, wherein the fourth transmission latency value is a sum of the transmission latency value indicated in the third link state information and a transmission latency value indicated in the fourth link state information.

29. The apparatus according to claim 22, wherein in a case that the link state information comprises at least one of the following: a redundant capacity and a transmission latency, the determining module comprises:
a first determining unit, configured to determine target link state information from the link state information, wherein the target link state meets at least one of the following conditions: the redundant capacity is greater than a first preset threshold, and the transmission latency is less than a second preset threshold; and
a second determining unit, configured to determine the target backhaul path based on the target link state information.

30. The apparatus according to claim 29, wherein the first preset threshold and the second preset threshold are determined according to a transmission requirement of a to-be-transmitted data packet.

31. The apparatus according to claim 22, wherein the apparatus further comprises:
a second obtaining module, configured to: before the target information is obtained, obtain the link state information of the backhaul link associated with the first communications node; and
a third transmission module, configured to transmit, to a second communications node, the link state information of the backhaul link associated with the first communications node, wherein the second communications node is a node controlling all first communications nodes in a communications system.

32. The apparatus according to claim 31, wherein the apparatus further comprises:
a first receiving module, configured to receive identification information sent by the second communications node, wherein the identification information is used to indicate a backhaul path selected for transmitting a data packets in the communications system.

33. The apparatus according to claim 32, wherein the apparatus further comprises:
a second receiving module, configured to receive first configuration information sent by the second communications node, wherein the first configuration information is used to indicate a redundant capacity and/or transmission latency of the backhaul path.

34. The apparatus according to claim 29, wherein the link state information is transmitted between a plurality of communications nodes and is carried in at least one of the following messages: a radio resource control RRC message, an F1-C message, a BAP control protocol data unit PDU, and a media access control-control element.

35. The apparatus according to claim 34, wherein a format of the message comprises at least one of the following fields: a redundant capacity, a transmission latency, a backhaul link identifier, and a BAP routing identifier.

36. The apparatus according to claim 35, wherein the format of the message comprises a plurality of entries, wherein each entry is used to indicate at least one of the following: information of the backhaul link identifier and information of the BAP routing identifier.

37. A rerouting apparatus, used in a second communications node, comprising:
a third receiving module, configured to receive link state information reported by a first communications node in a communications system, wherein the link state information is regarding a backhaul link associated with the first communications node, and the second communications node is a node controlling all first communications nodes in the communications system; and
a configuration module, configured to configure backhaul path identification information based on the link state information, wherein the backhaul path identification information is used to indicate a backhaul path selected for transmitting a data packet in the communications system.

38. The apparatus according to claim 36, wherein the apparatus further comprises:
a first sending module, configured to send first configuration information to the first communications node, wherein the first configuration information is used to indicate a redundant capacity and/or transmission latency of the backhaul path.

39. The apparatus according to claim 37, wherein the apparatus comprises:
a second sending module, configured to: before the link state information reported by the first communications node in the communications system is received, send second configuration information to the first communications node, wherein the second configuration information is used to indicate at least one of the following: triggering the first communications node to report the link state information, and the first communications node enabling a local rerouting function.

40. The apparatus according to claim 39, wherein a manner of the triggering comprises at least one of the following: periodic triggering, event triggering, and triggering by polling.

41. The apparatus according to claim 40, wherein the event triggering comprises at least one of the following events: the link state information meeting a preset condition, reception of a link state information message sent by another communications node, and reception of a traffic control feedback message.

42. The apparatus according to claim 37, wherein a validity time of the link state information on the second communications node is at least one of the following:
a preset duration after the link state information is received, wherein the preset duration is determined by the second communications node or is specified by a protocol; and
from reception of the link state information to reception of next link state information that carries the same backhaul link identifier or BAP routing identifier.

43. A communications apparatus, comprising a processor, a memory, and a program or instructions stored in the memory and capable of running on the processor, wherein when the program or instructions are executed by the processor, the steps of the rerouting method according to any one of claims 1 to 15 or the steps of the rerouting method according to any one of claims 16 to 21 are implemented.

44. A readable storage medium, wherein the readable storage medium stores a program or instructions, and when the program or instructions are executed by a processor, the steps of the rerouting method according to any one of claims 1 to 15 or the steps of the rerouting method according to any one of claims 16 to 21 are implemented.

45. A chip, comprising a processor and a communications interface, wherein the communications interface is coupled to the processor, and the processor is configured to run a program or instructions to implement the steps of the rerouting method according to any one of claims 1 to 15, or implement the steps of the rerouting method according to any one of claims 16 to 21.

46. A computer program product, wherein the program product is stored in a non-volatile storage medium, and the program product is executed by at least one processor to implement the steps of the rerouting method according to any one of claims 1 to 15, or implement the steps of the rerouting method according to any one of claims 16 to 21.

47. A communications device, configured to perform the steps of the rerouting method according to any one of claims 1 to 15, or configured to perform the steps of the rerouting method according to any one of claims 16 to 21.
